# EUROPEAN PATENT SPECIFICATION

(11) **EP 4 016 679 B1**
(45) Date of publication and mention of the grant of the patent: **10.07.2024**
(21) Application number: 21214701.1
(22) Date of filing: 15.12.2021
(51) Int. Cl.: H01M 8/04029, H01M 8/04089, H01M 8/04537, H01M 8/04746, H01M 8/04858

(54) **METHOD FOR OPERATING FUEL CELL SYSTEM AND FUEL CELL SYSTEM**
VERFAHREN ZUM BETRIEB EINES BRENNSTOFFZELLENSYSTEMS UND BRENNSTOFFZELLENSYSTEM
PROCÉDÉ DE FONCTIONNEMENT D'UN SYSTÈME DE PILE À COMBUSTIBLE ET SYSTÈME DE PILE À COMBUSTIBLE

(30) Priority: 18.12.2020 JP 2020209943
(43) Date of publication of application: 22.06.2022
(73) Proprietor: KABUSHIKI KAISHA TOSHIBA, Minato-ku Tokyo 105-0023 (JP); Toshiba Energy Systems & Solutions Corporation, Saiwai-ku Kawasaki-shi Kanagawa 2120013 (JP)
(72) Inventor: Hidai, Shoichi, Kawasaki-shi, Kanagawa, 212-0013 (JP); Ootsuka, Naoto, Kawasaki-shi, Kanagawa, 212-0013 (JP); Yamashita, Kyohei, Kawasaki-shi, Kanagawa, 212-0013 (JP); Maekawa, Akira, Kawasaki-shi, Kanagawa, 212-0013 (JP); Shimomichi, Tsuyoshi, Kawasaki-shi, Kanagawa, 212-0013 (JP)
(74) Representative: Hoffmann Eitle

(56) References cited:
- EP-A2- 2 056 385
- EP-A2- 2 375 484
- US-A1- 2010 203 408
- US-A1- 2012 282 536
- US-A1- 2019 348 694

## Description

### FIELD

Embodiments of the present invention relate to a method for operating a fuel cell system and the fuel cell system.

### BACKGROUND

A fuel cell system generates electricity by a fuel cell reaction caused by supplying a fuel gas containing hydrogen to a fuel electrode and air containing oxygen to an air electrode. Because a polymer electrolyte fuel cell applying a proton conductive ion exchange membrane as an electrolyte of a fuel cell operates at 60 to 80°C, it has the advantage that a start-up time is short. By making use of the advantage, the development aimed at a wide range of uses for fixing, household, fuel cell vehicle, mobile-phone base station, shipping, and the like is in progress, and the polymer electrolyte fuel cell is in practical use.

The fuel cell system is constituted of a fuel cell stack in which a plurality of fuel cells are stacked, accessories such as a blower for supplying the fuel gas, a blower for supplying the air, cooling water tank and pump, and a radiator, and, a control device. For power of the accessories except the fuel cell stack, electric power generated by the fuel cell stack is used.

Because the fuel cell reaction is an exothermic reaction, a cooling water is circulated through the fuel cell stack. The cooling water discharged from the fuel cell stack has its heat emitted at 60 to 80°C. A cogeneration system in which a heat exchange is performed with a secondary cooling water makes it possible to use the warmed secondary cooling water as hot water. Alternatively, a temperature of the cooling water is decreased by the radiator, and the cooling water is circulated to be used.

Because the fuel cell causes an electrochemical reaction, its power generation performance is in accordance with a current-voltage curve, and as current is increased, voltage drops. When an output is increased, the operation of increasing the current is performed, and due to the drop in voltage with increasing the current, it is necessary to increase the current by an addition corresponding to the drop in voltage.

Moreover, because increasing the current also increases a consumption of a reactive gas, it is also necessary to increase supply amounts of the fuel gas and the air by increasing outputs of the blowers. Further, it is also necessary to increase outputs of the radiator for cooling and the pump for supplying the cooling water. This increases the accessory power of the blowers, the pump, and the like, which further increases the required output.

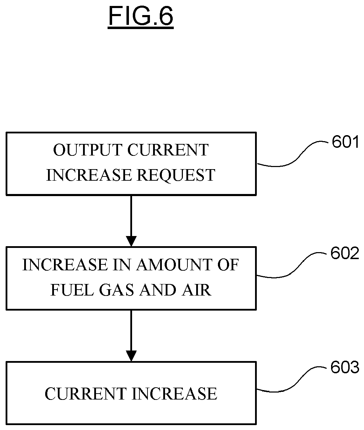

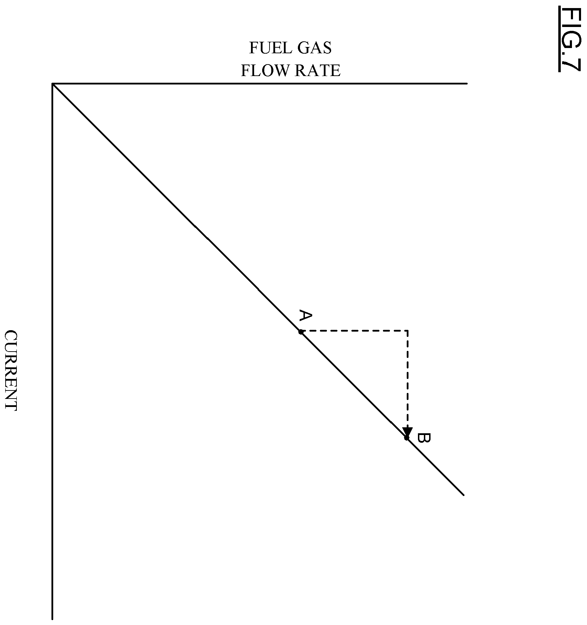

In a conventional operating method when an output is increased in a fuel cell system, as illustrated in FIG. 6, for an output increase request (Step 601), first, increasing amounts of a fuel gas and air (Step 602) stabilizes flow rates thereof, thereafter increasing current (Step 603). FIG. 7 is a graph in which a vertical axis is set as the fuel gas flow rate and a horizontal axis is set as the current to illustrate a relationship between these, and the relationship between the fuel gas flow rate and the current is a linear relationship in a normal case. Then, when the current is increased from current A point to target B point by the output current increase request, the fuel gas flow rate is first increased to a required amount, thereafter increasing the current, as indicated by a dashed line in the graph.

A long-term operation of the fuel cell system causes the power generation performance of the fuel cell to deteriorate, resulting in a drop in voltage. In such a state as described above, there is a problem in which a current required to obtain a rated output is increased more than that at the beginning, the accessory power further increases, and the voltage further drops, resulting in preventing a voltage required for the operation from being obtained.

EP 2 056 385 A2 describes a direct liquid fuel cell and a method and an apparatus for controlling fuel concentration therein. Fuel cell output current per unit area is sensed to determine if it becomes lowered by more than a certain magnitude and is maintained for a constant time. Fuel cell output voltage is sensed from an initial output voltage just before a point in time when the current per unit area is lowered, to a output voltage, the new output voltage being increased as the current per unit area is lowered and being then maintained at a new level. The new output voltage is compared with a transient voltage sensed between the initial output voltage and the new output voltage. If the transient voltage is equal to or less than the new output voltage, the fuel concentration in a liquid fuel supplied to the fuel cell stack is increased.

EP 2 375 484 A2 describes an operating method of a fuel cell including: an operating method of a fuel cell system, including: operation starting step without supplying fuel generating electricity at a predetermined voltage while stopping the supply of fuel; a voltage reducing step of reducing output voltage to targeted voltage; a current increasing rate measuring step of comparing the increasing rate of current with the increasing rate of targeted current; a fuel supply starting step of supplying fuel to the fuel cell stack; and a current following fuel supplying step of controlling fuel concentration and supplying it to be reached to the targeted current.

US 2010/203408 A describes a fuel cell system which prevents the deterioration of the fuel cell stack when feeding of the oxidant gas is paused under a load to perform a fuel conservation operation. Controller shuts down oxidant gas compressor and cooling water circulating pump to execute fuel conservation operation at a low fuel cell system load. The controller gives a current draw instruction to electric power controller. In the fuel conservation operation, electric power controller draws a current larger than zero from fuel cell stack, and keeps the total charge drawn per unit time constant or substantially constant.

The present invention has been made to cope with the above-described conventional circumstances, and it is an object to provide a method for operating a fuel cell system and the fuel cell system which allow a required output to be efficiently obtained.

The above problem is solved by the subject matter of the independent claims. Examples and technical descriptions of apparatuses, products and/or methods in the description and/or drawings which are not covered by the claims are presented not as embodiments of the invention but as background art or examples useful for understanding the invention.

### BRIEF DESCRIPTION OF THE DRAWINGS

[FIG. 1] a diagram schematically illustrating a schematic configuration of a fuel cell system according to embodiments.
[FIG. 2] a flowchart illustrating procedures of a method for operating the fuel cell system according to a first embodiment.
[FIG. 3] a flowchart illustrating procedures of a method for operating the fuel cell system according to a second embodiment.
[FIG. 4] a flowchart illustrating procedures of a method for operating the fuel cell system according to a third embodiment.
[FIG. 5] a graph illustrating a relationship between a fuel gas flow rate and a current in the embodiments.
[FIG. 6] a flowchart illustrating procedures of a method for operating a conventional fuel cell system.
[FIG. 7] a graph illustrating a relationship between a fuel gas flow rate and a current in a conventional technique.

### DETAILED DESCRIPTION

A method for operating a fuel cell system of this embodiment including: a fuel cell stack; and an accessory group constituted of, at least, a fuel gas supply means for supplying a fuel gas to the fuel cell stack, an air supply means for supplying air to the fuel cell stack, a cooling water supply means for supplying a cooling water to the fuel cell stack, and a radiator for performing heat exchange with the cooling water, the method is characterized by including: when a current output current is increased to a target output current, a step of increasing an output current while leaving at least one accessory power of the accessory group in a state lower than accessory power according to the target output current; and a step of thereafter increasing the accessory power in the state lower than the accessory power according to the target output current to the accessory power according to the target output current.

According to the embodiment of the present invention, it is possible to provide the method for operating the fuel cell system and the fuel cell system which allow a required output to be efficiently obtained.

Hereinafter, a method for operating a fuel cell system and the fuel cell system according to embodiments will be described in reference to the drawings.

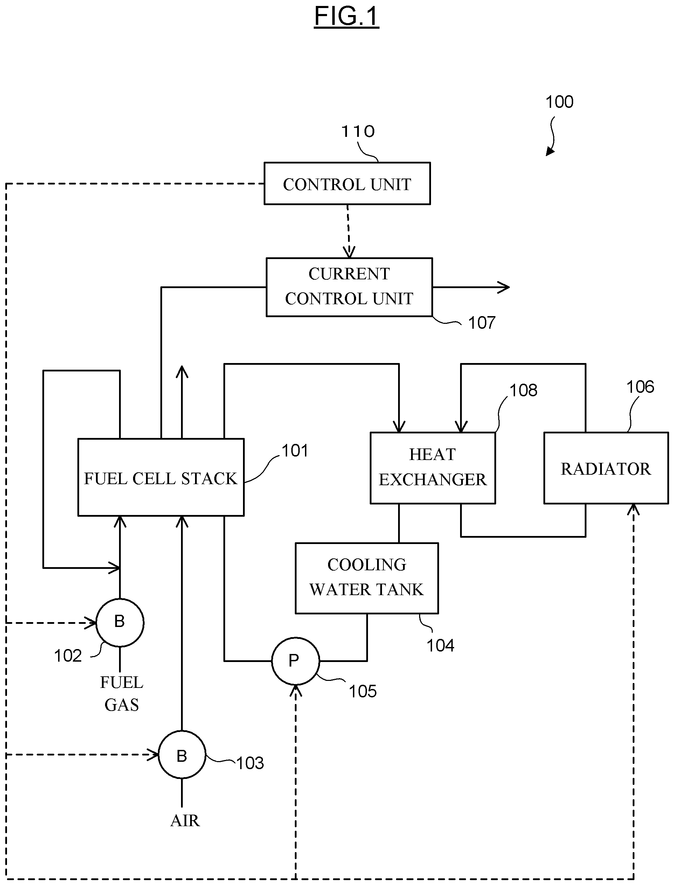

FIG. 1 is a diagram schematically illustrating a schematic configuration of the fuel cell system according to the embodiments. As illustrated in FIG. 1, a fuel cell system 100 includes a fuel cell stack 101 in which a plurality of fuel cells are stacked, a fuel gas supply blower 102 for supplying a fuel gas to the fuel cell stack 101, and an air supply blower 103 for supplying air which is an oxidant gas to the fuel cell stack 101.

Further, the fuel cell system 100 includes a cooling water tank 104 for storing a cooling water to cool the fuel cell stack 101 and the cooling water pump 105 for supplying the cooling water in the cooling water tank 104 to the fuel cell stack 101. A cooling water system is constituted of a primary cooling water system which circulates the cooling water through the fuel cell stack 101 and a secondary cooling water system, and performs heat exchange under both systems through a heat exchanger 108. The secondary cooling water system includes a radiator 106 for cooling the cooling water.

Further, the fuel cell system 100 includes a current control unit 107 which boosts the electricity generated by the fuel cell stack 101 and converts it into an alternating current to output it as a predetermined current output and a control unit 110 for controlling the entire fuel cell system 100. As power of the accessories except the fuel cell stack 101, such as the fuel gas supply blower 102, the air supply blower 103, the cooling water pump 105, and the radiator 106, an electric power generated by the fuel cell stack 101 is used. Further, operating conditions of these accessories are controlled by the control unit 110.

### (First embodiment)

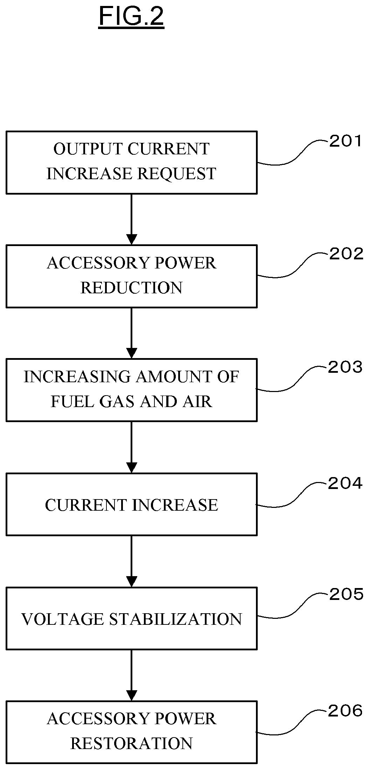

Next, a method for operating the fuel cell system 100 according to a first embodiment will be described, referring to FIG. 2. As illustrated in FIG. 2, in the first embodiment, when there is an output current increase request that an output current is increased from a current output current value to a target output current value (Step 201), first, accessory power is reduced in advance (Step 202).

Thereafter, flow rates of a fuel gas and an air gas are increased (Step 203), thereafter increasing current (Step 204). In this case, since the flow rates of the fuel gas and the air gas are increased, the accessory power of the fuel gas supply blower 102 and the air supply blower 103 increase, but other accessory power (as will be described later, the radiator 106 or the cooling water pump 105) is reduced in advance, thereby enabling suppression of a drop in voltage. Note that such a drop in voltage easily occurs, for example, in a state close to a limit in terms of performance, and for example, this embodiment can be effectively applied when an output is improved to 80% or more of a rated power, or the like.

Then, an output of the fuel cell stack 101 is monitored, and after confirming stabilization of the voltage (Step 205), the accessory power is restored (Step 206). That is, the accessory power is increased to an accessory power value corresponding to the target output current value. This makes it possible to stably operate the fuel cell system 100.

As a method for reducing the accessory power, for example, there can be used a method for reducing an output of the radiator 106 (the number of rotations of fans for air-cooling the radiator), or a method for reducing an output (discharge amount) of the cooling water pump 105, and they may be used in combination.

In this case, a timing at which the accessory power is restored is set to be after the stabilization of the voltage, but other than this, the accessory power may be restored when an outlet temperature of the cooling water at an outlet of the fuel cell stack 101 is monitored and the temperature becomes a predetermined reference value set beforehand. In this case, regarding the outlet temperature of the cooling water, normally, because an upper limit value of the temperature during the operation is set, the above-described reference value is preferably set to a temperature lower than the upper limit value. This makes it possible to prevent the outlet temperature of the cooling water from exceeding the upper limit value and the system from stopping.

Normally, because there is a time lag between a timing at which a power generation amount of the fuel cell stack 101 is increased and a timing at which the outlet temperature of the cooling water rises, a problem is unlikely to arise even though the output of the radiator 106 or the output of the cooling water pump 105 is temporarily reduced. Further, depending on circumstances, they may be temporarily stopped.

Note that in the above-described description, there has been described the case where when there is the output current increase request that the output current is increased from the current output current value to the target output current value, the accessory power is reduced more than that in the current state in advance. However, without being limited to the case where the accessory power is reduced more than that in the current state, the current accessory power may be maintained without being increased to accessory power according to the target output current value. Note that because increasing the output current also increases a heating value of the fuel cell stack 101, the output of the radiator 106 and the output of the cooling water pump 105 are normally increased when the output current is increased.

### (Second embodiment)

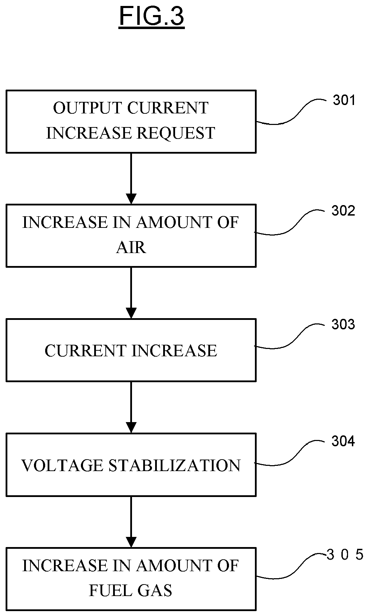

Next, a method for operating the fuel cell system 100 according to a second embodiment will be described, referring to FIG. 3. As illustrated in FIG. 3, in the second embodiment, when there is an output current increase request that an output current is increased from a current output current value to a target output current value (Step 301), first, an amount of only air is increased in advance (Step 302).

Next, current is increased (Step 303), an output of the fuel cell stack 101 is monitored, and after confirming stabilization of voltage (Step 304), an amount of a fuel gas is increased (Step 305).

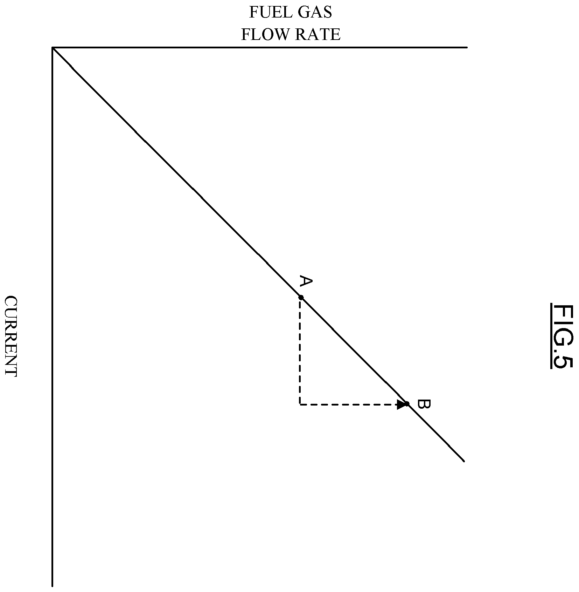

FIG. 5 is a graph in which a vertical axis is set as a fuel gas flow rate and a horizontal axis is set as the current to illustrate a relationship between these in the second embodiment, and the relationship between the fuel gas flow rate and the current is a linear relationship in a normal case. Then, when the current is increased from current A point to target B point by the output current increase request, the current is first increased, thereafter increasing the fuel gas flow rate to a required amount, as indicated by a dashed line in the graph.

In this case, as compared with a case where amounts of a fuel gas and air are increased simultaneously, at a timing of increasing the current, it becomes possible to reduce accessory power by power corresponding to an output increase of the fuel gas supply blower 102. Because the fuel gas flow rate is set to have a tolerance to a power generation amount in the fuel cell stack 101, a problem is unlikely to arise even though a timing of increasing the amount of the fuel gas is delayed with respect to the timing of increasing the current. However, the timing of increasing the amount of the fuel gas is balanced with a current increasing amount. This also makes it possible to approach a target current value gradually when the current increasing amount up to the target current value is large. Further, a combination with the previously described first embodiment may be made.

### (Third embodiment)

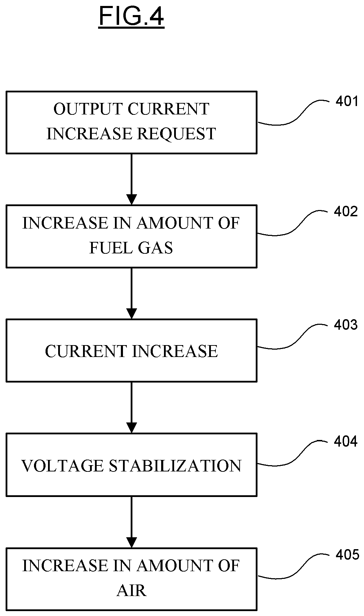

Next, a method for operating the fuel cell system 100 according to a third embodiment will be described, referring to FIG. 4. As illustrated in FIG. 4, in the third embodiment, when there is an output current increase request that an output current is increased from a current output current value to a target output current value (Step 401), first, an amount of only a fuel gas is increased in advance (Step 402).

Next, current is increased (Step 403), an output of the fuel cell stack 101 is monitored, and after confirming stabilization of voltage (Step 404), an amount of air is increased (Step 405).

In this case, as compared with a case where amounts of a fuel gas and air are increased simultaneously, at a timing of increasing the current, it becomes possible to reduce accessory power by power corresponding to an output increase of the air supply blower 103. Because an air flow rate is set to have a tolerance to a power generation amount in the fuel cell stack 101, a problem is unlikely to arise even though a timing of increasing the amount of the air is delayed with respect to the timing of increasing the current. However, the timing of increasing the amount of the air is balanced with a current increasing amount. This also makes it possible to approach a target current value gradually when the current increasing amount up to the target current value is large. Further, a combination with the previously described first embodiment may be made.

It is oxygen in air that is used for reaction in the fuel cell stack 101, and to obtain a required amount of oxygen, because an oxygen concentration in air is about 21%, the air flow rate is larger than a fuel gas flow rate. This makes a reduction effect of the accessory power by delaying the increase in the air flow rate more remarkable than that when the increase in the fuel gas flow rate is delayed.

While certain embodiments have been described above, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### REFERENCE SIGNS LIST

- 100: fuel cell system,
- 101: fuel cell stack,
- 102: fuel gas supply blower,
- 103: air supply blower,
- 104: cooling water tank,
- 105: cooling water pump,
- 106: radiator,
- 107: current control unit,
- 108: heat exchanger,
- 110: control unit.

## Claims

1. A method for operating a fuel cell system comprising:
a fuel cell stack (101); and
an accessory group constituted of, at least, a fuel gas supply blower (102) for supplying a fuel gas to the fuel cell stack (101), an air supply blower (103) for supplying air to the fuel cell stack (101), a cooling water pump (105) for supplying a cooling water to the fuel cell stack (101), and a radiator (106) for performing heat exchange with the cooling water, the method **characterized by** comprising:
when a current output current is increased to a target output current (201),
a step of increasing an output current (204) while leaving at least one accessory power of the accessory group in a state lower than accessory power according to the target output current (202); and
a step of thereafter increasing the accessory power in the state lower than the accessory power according to the target output current to the accessory power according to the target output current (206),
wherein a voltage of the fuel cell stack (101) is monitored, and after the step of increasing the output current (204), the voltage of the fuel cell stack (101) is stabilized (205), thereafter the accessory power is increased to an accessory power value corresponding to the target output current value.

2. The method for operating the fuel cell system according to claim 1,
wherein in the step of increasing the output current (204), power of the radiator (106) is set in a state lower than current power (202).

3. The method for operating the fuel cell system according to claim 2,
wherein a voltage of the fuel cell stack (101) is monitored, and after the step of increasing the output current (204), the voltage of the fuel cell stack (101) is stabilized (205), thereafter increasing the power of the radiator (106) to power according to the target output current (206).

4. The method for operating the fuel cell system according to claim 2,
wherein when an outlet temperature of a cooling water to cool the fuel cell stack (101) is monitored, and after the step of increasing the output current (204), the outlet temperature becomes higher than or equal to a reference temperature set beforehand, the power of the radiator (106) is increased to power according to the target output current (206).

5. The method for operating the fuel cell system according to claim 1, the method **characterized in that**,
in a step of, increasing a current output current to a target output current (201), increasing an output current (204), power of the cooling water pump (105) is set in a state lower than current power (202).

6. The method for operating the fuel cell system according to claim 5,
wherein a voltage of the fuel cell stack (101) is monitored, and after the step of increasing the output current (204), the voltage of the fuel cell stack (101) is stabilized (205), thereafter increasing the power of the cooling water pump (105) to power according to the target output current (206).

7. The method for operating the fuel cell system according to claim 5,
wherein when an outlet temperature of a cooling water to cool the fuel cell stack (101) is monitored, and after the step of increasing the output current (204), the outlet temperature becomes higher than or equal to a reference temperature set beforehand, the power of the cooling water pump (105) is increased to power according to the target output current (206).

8. The method for operating the fuel cell system according to claim 1, the method **characterized in that**
in a step of, increasing a current output current to a target output current (301), increasing an output current (303), power of the fuel gas supply blower (102) is set in a state lower than power according to the target output current.

9. The method for operating the fuel cell system according to claim 8,
wherein a voltage of the fuel cell stack (101) is monitored, and after the step of increasing the output current (303), the voltage of the fuel cell stack (101) is stabilized (304), thereafter increasing the power of the fuel gas supply blower (102) to the power according to the target output current.

10. The method for operating the fuel cell system according to claim 1, the method **characterized in that**
in a step of, increasing a current output current to a target output current (401), increasing an output current (403), power of the air supply blower (103) is set in a state lower than power according to the target output current.

11. The method for operating the fuel cell system according to claim 10,
wherein a voltage of the fuel cell stack (101) is monitored, and after the step of increasing the output current (403), the voltage of the fuel cell stack (101) is stabilized (404), thereafter increasing the power of the air supply blower (103) to the power according to the target output current.

12. A fuel cell system **characterized by** comprising:
a fuel cell stack (101);
an accessory group constituted of, at least, a fuel gas supply blower (102) which supplies a fuel gas to the fuel cell stack (101), an air supply blower (103) which supplies air to the fuel cell stack (101), a cooling water pump (105) which supplies a cooling water to the fuel cell stack (101), and a radiator (106) for performing heat exchange with the cooling water;
a current control unit (107) which controls an output current; and
a control unit (110) which controls operation of the accessory group and the current control unit (107),
wherein the control unit (110) performs
when a current output current is increased to a target output current (201),
a step of increasing an output current (204) with at least one accessory power of the accessory group in a state lower than accessory power according to the target output current (202), and
a step of thereafter increasing the accessory power in the state lower than power according to the target output current to the accessory power according to the target output current (206),
wherein a voltage of the fuel cell stack (101) is monitored, and after the step of increasing the output current (204), the voltage of the fuel cell stack (101) is stabilized (205), thereafter the accessory power is increased to an accessory power value corresponding to the target output current value.

## Patentansprüche

1. Verfahren zum Betrieb eines Brennstoffzellensystems, umfassend:
ein Brennstoffzellenstapel (101); und
eine Zubehörgruppe, gebildet aus mindestens einem Brenngasversorgungsgebläse (102) zur Zufuhr eines Brenngases zum Brennstoffzellenstapel (101), einem Luftzufuhrgebläse (103) zur Luftzufuhr zum Brennstoffzellenstapel (101), einer Kühlwasserpumpe (105) zur Zufuhr eines Kühlwassers zum Brennstoffzellenstapel (101) und einem Radiator (106) zur Durchführung eines Wärmeaustauschs mit dem Kühlwasser, das Verfahren ist **dadurch gekennzeichnet, dass** es umfasst:
wenn ein aktueller Ausgangsstrom auf einen Zielausgangsstrom (201) erhöht wird,
ein Schritt der Erhöhung eines Ausgangsstroms (204), während mindestens eine Zusatzleistung der Zubehörgruppe in einem Zustand belassen wird, der niedriger ist als die Zusatzleistung gemäß dem Zielausgangsstrom (202); und
ein Schritt der anschließenden Erhöhung der Zusatzleistung in dem Zustand, der niedriger ist als die Zusatzleistung gemäß dem Zielausgangsstrom auf die Zusatzleistung gemäß dem Zielausgangsstrom (206),
wobei eine Spannung des Brennstoffzellenstapels (101) überwacht wird und nach dem Schritt der Erhöhung des Ausgangsstroms (204) wird die Spannung des Brennstoffzellenstapels (101) stabilisiert (205), wonach die Zusatzleistung auf einen Zusatzleistungswert erhöht wird, der dem Zielausgangsstromwert entspricht.

2. Verfahren zum Betrieb des Brennstoffzellensystems nach Anspruch 1,
wobei in dem Schritt der Erhöhung des Ausgangsstroms (204) die Leistung des Radiators (106) in einen Zustand versetzt wird, der niedriger ist als die aktuelle Leistung (202).

3. Verfahren zum Betrieb des Brennstoffzellensystems nach Anspruch 2,
wobei eine Spannung des Brennstoffzellenstapels (101) überwacht wird und nach dem Schritt der Erhöhung des Ausgangsstroms (204) wird die Spannung des Brennstoffzellenstapels (101) stabilisiert (205), danach die Leistung des Radiators (106) auf Leistung entsprechend dem Zielausgangsstrom (206) erhöht wird.

4. Verfahren zum Betrieb des Brennstoffzellensystems nach Anspruch 2,
wobei wenn eine Austrittstemperatur eines Kühlwassers zur Kühlung des Brennstoffzellenstapels (101) überwacht wird, und nach dem Schritt der Erhöhung des Ausgangsstroms (204) die Austrittstemperatur größer oder gleich einer zuvor eingestellten Referenztemperatur wird, wird die Leistung des Radiators (106) auf Leistung entsprechend dem Zielausgangsstrom (206) erhöht.

5. Verfahren zum Betrieb des Brennstoffzellensystems nach Anspruch 1, das Verfahren **dadurch gekennzeichnet, dass**
in einem Schritt der Erhöhung eines aktuellen Ausgangsstroms auf einen Zielausgangsstrom (201) und der Erhöhung eines Ausgangsstroms (204) wird die Leistung der Kühlwasserpumpe (105) in einen Zustand versetzt, der niedriger ist als die aktuelle Leistung (202).

6. Verfahren zum Betrieb des Brennstoffzellensystems nach Anspruch 5,
wobei eine Spannung des Brennstoffzellenstapels (101) überwacht wird und nach dem Schritt der Erhöhung des Ausgangsstroms (204) wird die Spannung des Brennstoffzellenstapels (101) stabilisiert (205), wonach die Leistung der Kühlwasserpumpe (105) auf Leistung entsprechend dem Zielausgangsstrom (206) erhöht wird.

7. Verfahren zum Betrieb des Brennstoffzellensystems nach Anspruch 5,
wobei wenn eine Austrittstemperatur eines Kühlwassers zur Kühlung des Brennstoffzellenstapels (101) überwacht wird und nach dem Schritt der Erhöhung des Ausgangsstroms (204) die Austrittstemperatur größer oder gleich einer zuvor eingestellten Referenztemperatur wird, wird die Leistung der Kühlwasserpumpe (105) auf Leistung entsprechend dem Zielausgangsstrom (206) erhöht.

8. Verfahren zum Betrieb des Brennstoffzellensystems nach Anspruch 1, das Verfahren **dadurch gekennzeichnet, dass**
in einem Schritt der Erhöhung eines aktuellen Ausgangsstroms auf einen Zielausgangsstrom (301) und der Erhöhung eines Ausgangsstroms (303) wird die Leistung des Brenngasversorgungsgebläses (102) in einen Zustand versetzt, der niedriger als die Leistung gemäß dem Zielausgangsstrom ist.

9. Verfahren zum Betrieb des Brennstoffzellensystems nach Anspruch 8,
wobei eine Spannung des Brennstoffzellenstapels (101) überwacht wird und nach dem Schritt der Erhöhung des Ausgangsstroms (303) wird die Spannung des Brennstoffzellenstapels (101) stabilisiert (304), wonach die Leistung des Brenngasversorgungsgebläses (102) auf die Leistung entsprechend dem Zielausgangsstrom erhöht wird.

10. Verfahren zum Betrieb des Brennstoffzellensystems nach Anspruch 1, das Verfahren **dadurch gekennzeichnet, dass**
in einem Schritt der Erhöhung eines aktuellen Ausgangsstroms auf einen Zielausgangsstrom (401) und der Erhöhung eines Ausgangsstroms (403) wird die Leistung des Luftzufuhrgebläse (103) in einen Zustand versetzt, der niedriger als die Leistung gemäß dem Zielausgangsstrom ist.

11. Verfahren zum Betrieb des Brennstoffzellensystems nach Anspruch 10,
wobei eine Spannung des Brennstoffzellenstapels (101) überwacht wird und nach dem Schritt der Erhöhung des Ausgangsstroms (403) wird die Spannung des Brennstoffzellenstapels (101) stabilisiert (404), wonach die Leistung des Luftzufuhrgebläses (103) auf die Leistung entsprechend dem Zielausgangsstrom erhöht wird.

12. Brennstoffzellensystem, **gekennzeichnet durch**:
ein Brennstoffzellenstapel (101); und
eine Zubehörgruppe, bestehend aus mindestens einem Brenngasversorgungsgebläse (102), die ein Brenngases zum Brennstoffzellenstapel (101) zuführt, einem Luftzufuhrgebläse (103), die Luft zum Brennstoffzellenstapel (101) zuführt, einer Kühlwasserpumpe (105), die ein Kühlwasser zum Brennstoffzellenstapel (101) zuführt, und einem Radiator (106) zur Durchführung eines Wärmeaustauschs mit dem Kühlwasser;
eine Stromsteuereinheit (107), die einen Ausgangsstrom steuert; und
eine Steuereinheit (110), die den Betrieb der Zubehörgruppe und der Stromsteuereinheit (107) steuert,
wobei die Steuereinheit (110),
wenn ein aktueller Ausgangsstrom auf einen Zielausgangsstrom (201) erhöht wird,
ein Schritt der Erhöhung eines Ausgangsstroms (204), während mindestens eine Zusatzleistung der Zubehörgruppe in einem Zustand belassen wird, der niedriger ist als die Zusatzleistung gemäß dem Zielausgangsstrom (202); und
ein Schritt der anschließenden Erhöhung der Zusatzleistung in dem Zustand, der niedriger ist als die Zusatzleistung gemäß dem Zielausgangsstrom auf die Zusatzleistung gemäß dem Zielausgangsstrom (206), durchführt,
wobei eine Spannung des Brennstoffzellenstapels (101) überwacht wird und nach dem Schritt der Erhöhung des Ausgangsstroms (204) wird die Spannung des Brennstoffzellenstapels (101) stabilisiert (205), wonach die Zusatzleistung auf einen Zusatzleistungswert erhöht wird, der dem Zielausgangsstromwert entspricht.

## Revendications

1. Procédé de fonctionnement d'un système de piles à combustible comprenant :
un empilement (101) de piles à combustible ; et
un groupe auxiliaire constitué, au moins, d'un ventilateur (102) d'alimentation en gaz combustible pour alimenter en gaz combustible l'empilement (101) de piles à combustible, d'un ventilateur (103) d'alimentation en air pour alimenter en air l'empilement (101) de piles à combustible, une pompe (105) à eau de refroidissement pour alimenter en eau de refroidissement l'empilement (101) de piles à combustible, et un radiateur (106) pour réaliser un échange de chaleur avec l'eau de refroidissement, le procédé étant **caractérisé en ce qu'**il comprend :
lorsqu'un courant de sortie actuel est augmenté à un courant de sortie cible (201),
une étape d'augmentation d'un courant de sortie (204) tout en laissant au moins une puissance auxiliaire du groupe auxiliaire dans un état inférieur à une puissance auxiliaire selon le courant (202) de sortie cible ; et
une étape d'augmentation ultérieure de la puissance auxiliaire dans l'état inférieur à la puissance auxiliaire selon le courant de sortie cible, à la puissance auxiliaire selon le courant de sortie cible (206),
dans lequel une tension de l'empilement (101) de piles à combustible est surveillée, et après l'étape d'augmentation du courant de sortie (204), la tension de l'empilement (101) de piles à combustible est stabilisée (205), la puissance auxiliaire est ensuite augmentée à une valeur de puissance auxiliaire correspondant à la valeur de courant de sortie cible.

2. Procédé de fonctionnement du système de piles à combustible selon la revendication 1,
dans lequel, dans l'étape d'augmentation du courant de sortie (204), une puissance du radiateur (106) est réglée dans un état inférieur à une puissance (202) actuelle.

3. Procédé de fonctionnement du système de piles à combustible selon la revendication 2,
dans lequel une tension de l'empilement (101) de piles à combustible est surveillée, et après l'étape d'augmentation du courant de sortie (204), la tension de l'empilement (101) de piles à combustible est stabilisée (205), augmentant ensuite la puissance du radiateur (106) à la puissance selon le courant de sortie cible (206).

4. Procédé de fonctionnement du système de piles à combustible selon la revendication 2,
dans lequel lorsqu'une température de sortie d'une eau de refroidissement destinée à refroidir l'empilement (101) de piles à combustible est surveillée, et après l'étape d'augmentation du courant de sortie (204), la température de sortie devient supérieure ou égale à une température de référence réglée à l'avance, la puissance du radiateur (106) est augmentée à une puissance selon le courant de sortie cible (206).

5. Procédé de fonctionnement du système de piles à combustible selon la revendication 1, le procédé étant **caractérisé en ce que**,
dans une étape d'augmentation d'un courant de sortie actuel à un courant de sortie cible (201), puis d'augmentation d'un courant de sortie (204), une puissance de la pompe (105) à eau de refroidissement est réglée dans un état inférieur à une puissance (202) actuelle.

6. Procédé de fonctionnement du système de piles à combustible selon la revendication 5,
dans lequel une tension de l'empilement (101) de piles à combustible est surveillée, et après l'étape d'augmentation du courant de sortie (204), la tension de l'empilement (101) de piles à combustible est stabilisée (205), augmentant ensuite la puissance de la pompe (105) à eau de refroidissement à une puissance selon le courant de sortie cible (206).

7. Procédé de fonctionnement du système de piles à combustible selon la revendication 5,
dans lequel lorsqu'une température de sortie d'une eau de refroidissement destinée à refroidir l'empilement (101) de piles à combustible est surveillée, et après l'étape d'augmentation du courant de sortie (204), la température de sortie devient supérieure ou égale à une température de référence réglée à l'avance, la puissance de la pompe (105) à eau de refroidissement est augmentée à une puissance selon le courant de sortie cible (206).

8. Procédé de fonctionnement du système de piles à combustible selon la revendication 1, le procédé étant **caractérisé en ce que**
dans une étape d'augmentation d'un courant de sortie actuel à un courant de sortie cible (301), puis d'augmentation d'un courant de sortie (303), une puissance du ventilateur (102) d'alimentation en gaz combustible est réglée dans un état inférieur à une puissance selon le courant de sortie cible.

9. Procédé de fonctionnement du système de piles à combustible selon la revendication 8,
dans lequel une tension de l'empilement (101) de piles à combustible est surveillée, et après l'étape d'augmentation du courant de sortie (303), la tension de l'empilement (101) de piles à combustible est stabilisée (304), augmentant ensuite la puissance du ventilateur (102) d'alimentation en gaz combustible à la puissance selon le courant de sortie cible.

10. Procédé de fonctionnement du système de piles à combustible selon la revendication 1, le procédé étant **caractérisé en ce que**
dans une étape d'augmentation d'un courant de sortie actuel à un courant de sortie cible (401), puis d'augmentation d'un courant de sortie (403), une puissance du ventilateur (103) d'alimentation en air est réglée dans un état inférieur à une puissance selon le courant de sortie cible.

11. Procédé de fonctionnement du système de piles à combustible selon la revendication 10,
dans lequel une tension de l'empilement (101) de piles à combustible est surveillée, et après l'étape d'augmentation du courant de sortie (403), la tension de l'empilement (101) de piles à combustible est stabilisée (404), augmentant ensuite la puissance du ventilateur (103) d'alimentation en air combustible à la puissance selon le courant de sortie cible.

12. Système de piles à combustible **caractérisé en ce qu'**il comprend :
un empilement (101) de piles à combustible ;
un groupe auxiliaire constitué, au moins, d'un ventilateur (102) d'alimentation en gaz combustible qui alimente en gaz combustible l'empilement (101) de piles à combustible, d'un ventilateur (103) d'alimentation en air qui alimente en air l'empilement (101) de piles à combustible, d'une pompe (105) à eau de refroidissement qui alimente en eau de refroidissement l'empilement (101) de piles à combustible, et d'un radiateur (106) pour réaliser un échange de chaleur avec l'eau de refroidissement ;
une unité (107) de commande de courant qui commande un courant de sortie ; et
une unité (110) de commande qui commande le fonctionnement du groupe auxiliaire et de l'unité (107) de commande de courant,
dans lequel l'unité (110) de commande réalise
lorsqu'un courant de sortie actuel est augmenté à un courant de sortie cible (201),
une étape d'augmentation d'un courant de sortie (204) avec au moins une puissance auxiliaire du groupe auxiliaire dans un état inférieur à une puissance auxiliaire selon le courant (202) de sortie cible, et
une étape d'augmentation ultérieure de la puissance auxiliaire dans l'état inférieur à une puissance selon le courant de sortie cible à la puissance auxiliaire selon le courant de sortie cible (206),
dans lequel une tension de l'empilement (101) de piles à combustible est surveillée, et après l'étape d'augmentation du courant de sortie (204), la tension de l'empilement (101) de piles à combustible est stabilisée (205), la puissance auxiliaire est ensuite augmentée à une valeur de puissance auxiliaire correspondant à la valeur de courant de sortie cible.
